# EUROPEAN PATENT APPLICATION

(11) **EP 3 163 817 A1**
(43) Date of publication of application: **03.05.2017**
(21) Application number: 15855648.0
(22) Date of filing: 08.04.2015
(51) Int. Cl.: H04L 12/813

(54) **WIRELESS CONGESTION CONTROL METHOD AND DEVICE**

(30) Priority: 31.10.2014 CN 201410616678
(71) Applicant: HUAWEI TECHNOLOGIES CO., LTD., Shenzhen Guangdong 518129 (CN)
(72) Inventor: FAN, Yuqun, Shenzhen Guangdong 518129 (CN); ZHOU, Lei, Shenzhen Guangdong 518129 (CN)
(74) Representative: Thun, Clemens
(86) International application number: PCT/CN2015/076087
(87) International publication number: WO 2016/065846

(57) **Abstract**

The present invention discloses a radio congestion control method and device, and the method includes: obtaining, by a PCRF, actual rates of service flows processed by multiple user equipment; determining, by the PCRF, a congestion relief policy according to the obtained actual rates of the service flows processed by the multiple user equipment, where the congestion relief policy is used to limit an actual rate of a service flow processed by a user equipment in the multiple user equipment; and sending, by the PCRF, the congestion relief policy to a service flow pass-through node, so that the service flow pass-through node executes the congestion relief policy. It is determined, according to obtained actual rates of service flows processed by different user equipment, that an actual rate of a service flow processed by a user equipment is limited, so as to increase an actual rate of a service flow processed by another user equipment. This effectively relieves system congestion and improves user experience during congestion.

## Description

This application claims priority to Chinese Patent Application No. 201410616678.2, filed with the Chinese Patent Office on October 31, 2014 and entitled "RADIO CONGESTION CONTROL METHOD AND DEVICE", which is incorporated herein by reference in its entirety.

### TECHNICAL FIELD

The present invention relates to the field of wireless communications technologies, and in particular, to a radio congestion control method and device.

### BACKGROUND

In a radio Long Term Evolution (English: Long Term Evolution, LTE for short) network, a Policy and Charging Control (Policy and Charging Control, PCC for short) architecture is used to implement a policy determining and charging function for user data transmission.

Specifically, as a main function entity for generating a control policy, a policy and charging rule function (English: Policy and Charging Rule Function, PCRF for short) receives application layer information from an application function (English: Application Function, AF for short), user subscription information from a subscription profile repository (SPR for short), and IP-connectivity access network (English: IP Connectivity Access Network, IP-CAN for short) information from a policy and charging enforcement function (English: Policy and Charging Enforcement Function, PCEF for short); obtains, according to the received application layer information, user subscription information, and IP-CAN information, a control policy based on a service data flow (English: Service Date Flow, SDF for short); and sends the obtained control policy to a data pass-through node, such as the PCEF or an evolved NodeB (English: Evolved NodeB, eNodeB for short), for execution.

As a last node through which data flows to a user equipment (English: User Equipment, UE for short), the eNodeB transmits data to the UE according to the control policy and a scheduling policy that are sent by the PCRF. However, in an actual data transmission process, for many reasons such as a UE channel condition, a quantity of users accessing to a same cell, and a user service data volume, data sent to a user is likely to congest at the eNodeB, thereby causing a problem such as a relatively great delay of user data transmission or data loss.

### SUMMARY

In view of this, embodiments of the present invention provide a radio congestion control method and device, used for determining a congestion relief policy to relieve system congestion.

According to a first aspect of the present invention, a radio congestion control method is provided, including:
obtaining, by a policy and charging rule function Policy and Charging Rule Function, actual rates of service flows processed by multiple user equipment;
determining, by the PCRF, a congestion relief policy according to the obtained actual rates of the service flows processed by the multiple user equipment, where the congestion relief policy is used to limit an actual rate of a service flow processed by a user equipment in the multiple user equipment; and
sending, by the PCRF, the congestion relief policy to a service flow pass-through node.

With reference to the first aspect of the present invention, in a first possible implementation manner, the method further includes:
obtaining, by the PCRF, subscription information of the multiple user equipment, or obtaining service flow information of the service flows processed by the multiple user equipment; and
the determining, by the PCRF, a congestion relief policy according to the obtained actual rates of the service flows processed by the multiple user equipment includes:
   determining, by the PCRF according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
   determining, by the PCRF, the congestion relief policy according to the service flow whose actual rate is limited and the target rate of the limited service flow, where
   the target rate of the limited service flow includes a maximum bit rate of the limited service flow.

With reference to the first possible implementation manner of the first aspect of the present invention, in a second possible implementation manner, the method further includes:
obtaining, by the PCRF, channel qualities measured by the multiple user equipment; and
the determining, by the PCRF, a congestion relief policy according to the obtained actual rates of the service flows processed by the multiple user equipment includes:
   determining, by the PCRF according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and the target rate of the limited service flow; and
   determining, by the PCRF, the congestion relief policy according to the service flow whose actual rate is limited and the target rate of the limited service flow.

With reference to the first aspect of the present invention, the first possible implementation manner of the first aspect of the present invention, or the second possible implementation manner of the first aspect of the present invention, in a third possible implementation manner, the service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than a specified first threshold class; and/or
according to a service processing class included in the obtained application layer information of the service flows processed by the multiple user equipment, the service flow whose actual rate is limited belongs to a service flow whose service processing class is lower than a specified second threshold class.

With reference to the first aspect of the present invention, the first possible implementation manner of the first aspect of the present invention, the second possible implementation manner of the first aspect of the present invention, or the third possible implementation manner of the first aspect of the present invention, in a fourth possible implementation manner, the obtaining, by a PCRF, actual rates of service flows processed by multiple user equipment includes:
receiving, by the PCRF, RAN user plane congestion information RUCI sent by a radio congestion awareness function RCAF or the service flow pass-through node, where the RUCI includes the actual rates of the service flows processed by the multiple user equipment; and
obtaining, by the PCRF from the received RUCI, the actual rates of the service flows processed by the multiple user equipment.

With reference to the fourth possible implementation manner of the first aspect of the present invention, in a fifth possible implementation manner, the service flow pass-through node includes at least one or more of a policy and charging enforcement function PCEF, a traffic detection function TDF, or an evolved NodeB eNodeB.

According to a second aspect of the present invention, a radio congestion control method is provided, including:
sending, by a service flow pass-through node, actual rates of service flows processed by multiple user equipment to a policy and charging rule function Policy and Charging Rule Function;
receiving, by the service flow pass-through node, a congestion relief policy sent by the PCRF, where the congestion relief policy is determined by the PCRF according to the actual rates of the service flows processed by the multiple user equipment, and the congestion relief policy is used to limit an actual rate of a service flow of a user equipment in the multiple user equipment; and
controlling, by the service flow pass-through node, current congestion according to the received congestion relief policy.

With reference to the second aspect of the present invention, in a first possible implementation manner, the sending, by a service flow pass-through node, actual rates of service flows processed by multiple user equipment to a policy and charging rule function Policy and Charging Rule Function includes:
sending, by the service flow pass-through node, RAN user plane congestion information RUCI to the policy and charging rule function Policy and Charging Rule Function, where the RUCI includes the actual rates of the service flows processed by the multiple user equipment.

With reference to the second aspect of the present invention, or the first possible implementation manner of the second aspect of the present invention, in a second possible implementation manner, the sending, by a service flow pass-through node, actual rates of service flows processed by multiple user equipment to a policy and charging rule function Policy and Charging Rule Function includes:
collecting, by the service flow pass-through node, statistics on actual rates of the service flows processed by the multiple user equipment within a specified time length, and calculating an average rate of a service flow processed by each user equipment within the specified time length; and
when a calculated average rate of at least one service flow is less than a specified rate threshold, triggering the service flow pass-through node to send the actual rates of the service flows processed by the multiple user equipment to the PCRF.

With reference to the second aspect of the present invention, the first possible implementation manner of the second aspect of the present invention, or the second possible implementation manner of the second aspect of the present invention, in a third possible implementation manner, the congestion relief policy includes the service flow whose actual rate is limited and a target rate of the service flow whose actual rate is limited; and
the controlling, by the service flow pass-through node, current congestion according to the received congestion relief policy includes:
for the user equipment processing the service flow whose actual rate is limited, reducing, by the service flow pass-through node according to the target rate that is of the service flow whose actual rate is limited and that is included in the congestion relief policy, the actual rate of the limited service flow processed by the user equipment.

According to a third aspect of the present invention, a radio congestion control device is provided, including:
an obtaining module, configured to obtain actual rates of service flows processed by multiple user equipment;
a determining module, configured to determine a congestion relief policy according to the obtained actual rates of the service flows processed by the multiple user equipment, where the congestion relief policy is used to limit an actual rate of a service flow processed by a user equipment in the multiple user equipment; and
a control module, configured to send the congestion relief policy to a service flow pass-through node.

With reference to the third aspect of the present invention, in a first possible implementation manner, the obtaining module is further configured to: obtain subscription information of the multiple user equipment, or obtain service flow information of the service flows processed by the multiple user equipment; and
the determining module is specifically configured to: determine, according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
determine the congestion relief policy according to the service flow whose actual rate is limited and the target rate of the limited service flow, where
the target rate of the limited service flow includes a maximum bit rate of the limited service flow.

With reference to the first possible implementation manner of the third aspect of the present invention, in a second possible implementation manner, the obtaining module is further configured to obtain channel qualities measured by the multiple user equipment; and
the determining module is specifically configured to: determine, according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and the target rate of the limited service flow; and
determine the congestion relief policy according to the service flow whose actual rate is limited and the target rate of the limited service flow.

With reference to the third aspect of the present invention, the first possible implementation manner of the third aspect of the present invention, or the second possible implementation manner of the third aspect of the present invention, in a third possible implementation manner, the service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than a specified first threshold class; and/or
according to a service processing class included in the obtained application layer information of the service flows processed by the multiple user equipment, the service flow whose actual rate is limited belongs to a service flow whose service processing class is lower than a specified second threshold class.

With reference to the third aspect of the present invention, the first possible implementation manner of the third aspect of the present invention, the second possible implementation manner of the third aspect of the present invention, or the third possible implementation manner of the third aspect of the present invention, in a fourth possible implementation manner, the obtaining module is specifically configured to: receive RAN user plane congestion information RUCI sent by a radio congestion awareness function RCAF or the service flow pass-through node, where the RUCI includes the actual rates of the service flows processed by the multiple user equipment; and obtain, from the received RUCI, the actual rates of the service flows processed by the multiple user equipment.

With reference to the fourth possible implementation manner of the third aspect of the present invention, in a fifth possible implementation manner, the service flow pass-through node includes at least one or more of a policy and charging enforcement function PCEF, a traffic detection function TDF, or an evolved NodeB eNodeB.

According to a fourth aspect of the present invention, a radio congestion control device is provided, including:
a sending module, configured to send actual rates of service flows processed by multiple user equipment to a policy and charging rule function Policy and Charging Rule Function;
a receiving module, configured to receive a congestion relief policy sent by the PCRF, where the congestion relief policy is determined by the PCRF according to the actual rates of the service flows processed by the multiple user equipment, and the congestion relief policy is used to limit an actual rate of a service flow of a user equipment in the multiple user equipment; and
a congestion control module, configured to control current congestion according to the received congestion relief policy.

With reference to the fourth aspect of the present invention, in a first possible implementation manner, the sending module is specifically configured to send RAN user plane congestion information RUCI to the policy and charging rule function Policy and Charging Rule Function, where the RUCI includes the actual rates of the service flows processed by the multiple user equipment.

With reference to the fourth aspect of the present invention, or the first possible implementation manner of the fourth aspect of the present invention, in a second possible implementation manner, the sending module is specifically configured to: collect statistics on actual rates of the service flows processed by the multiple user equipment within a specified time length, and calculate an average rate of a service flow processed by each user equipment within the specified time length; and
when a calculated average rate of at least one service flow is less than a specified rate threshold, be triggered to send the actual rates of the service flows processed by the multiple user equipment to the PCRF.

With reference to the fourth aspect of the present invention, the first possible implementation manner of the fourth aspect of the present invention, or the second possible implementation manner of the fourth aspect of the present invention, in a third possible implementation manner, the congestion relief policy includes the service flow whose actual rate is limited and a target rate of the service flow whose actual rate is limited; and
the congestion control module is specifically configured to: for the user equipment processing the service flow whose actual rate is limited, reduce, according to the target rate that is of the service flow whose actual rate is limited and that is included in the congestion relief policy, the actual rate of the limited service flow processed by the user equipment.

The present invention brings the following beneficial effects:
In the embodiments of the present invention, a policy and charging rule function PCRF obtains actual rates of service flows processed by multiple user equipment. The PCRF determines a congestion relief policy according to the obtained actual rates of the service flows processed by the multiple user equipment. The congestion relief policy is used to limit an actual rate of a service flow processed by a user equipment in the multiple user equipment. The PCRF sends the congestion relief policy to a service flow pass-through node, so that the service flow pass-through node executes the congestion relief policy. In the embodiments of the present invention, it is determined, according to obtained actual rates of service flows processed by different user equipment, that an actual rate of a service flow processed by a user equipment is limited, so as to increase an actual rate of a service flow processed by another user equipment. This effectively relieves system congestion and improves user experience during congestion.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a radio congestion control method according to Embodiment 1 of the present invention;
FIG. 2 is a schematic flowchart of a radio congestion control method according to Embodiment 2 of the present invention;
FIG. 3 is a schematic flowchart of a radio congestion control method according to Embodiment 3 of the present invention;
FIG. 4 is a schematic flowchart of a radio congestion control method according to Embodiment 4 of the present invention;
FIG. 5 is a schematic structural diagram of a radio congestion control device according to Embodiment 5 of the present invention;
FIG. 6 is a schematic structural diagram of a radio congestion control device according to Embodiment 6 of the present invention;
FIG. 7 is a schematic structural diagram of a radio congestion control device according to Embodiment 7 of the present invention; and
FIG. 8 is a schematic structural diagram of a radio congestion control device according to Embodiment 8 of the present invention.

### DESCRIPTION OF EMBODIMENTS

To achieve an objective of the present invention, embodiments of the present invention provide a radio congestion control method and device. A policy and charging rule function PCRF obtains actual rates of service flows processed by multiple user equipment. The PCRF determines a congestion relief policy according to the obtained actual rates of the service flows processed by the multiple user equipment. The congestion relief policy is used to limit an actual rate of a service flow processed by a user equipment in the multiple user equipment. The PCRF sends the congestion relief policy to a service flow pass-through node, so that the service flow pass-through node executes the congestion relief policy. In the embodiments of the present invention, it is determined, according to obtained actual rates of service flows processed by different user equipment, that an actual rate of a service flow processed by a user equipment is limited, so as to increase an actual rate of a service flow processed by another user equipment. This effectively relieves system congestion and improves user experience during congestion.

It should be noted that to relieve a system congestion problem, a radio congestion awareness function (English: Radio Congestion Awareness Function, RCAF for short) and a new interface Np may be introduced to a PCC architecture.

The Np interface is configured to transmit RAN user plane congestion information (English: RAN User plan Congestion Information, RUCI for short) between the RCAF and the PCRF.

The following further describes the embodiments of the present invention in detail with reference to specification drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

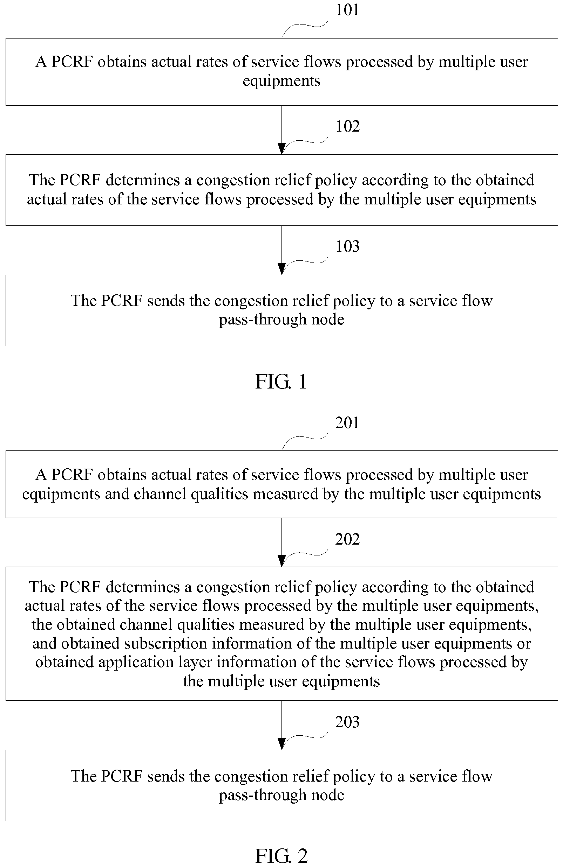

As shown in FIG. 1, FIG. 1 is a schematic flowchart of a radio congestion control method according to Embodiment 1 of the present invention. The method may be described as follows:
Step 101: A PCRF obtains actual rates of service flows processed by multiple user equipment.

In step 101, the multiple user equipment processing the service flows whose actual rates are obtained by the PCRF meet the following condition:
the multiple user equipment belong to one user equipment cluster, and user equipment in the user equipment cluster share a same radio resource.

The user equipment in the user equipment cluster access to the same radio resource in one or more manners of Code Division Multiple Access (English: Code Division Multiple Access, CDMA for short), Frequency Division Multiple Access (English: Frequency Division Multiple Access, FDMA for short), or Time Division Multiple Access (English: Time Division Multiple Access, TDMA for short).

For example, the multiple user equipment may be multiple user equipment accessing to a same serving cell or sector in the foregoing access manner; or may be user equipment accessing to a same service across multiple cells.

It should be noted that the actual rates of the service flows include average rates of the service flows within a specified time length.

In another embodiment of the present invention, a manner for obtaining, by the policy and charging rule function PCRF, the actual rates of the service flows processed by the multiple user equipment includes but is not limited to the following:

The PCRF receives RUCI sent by a radio congestion awareness function RCAF or a service flow pass-through node, where the RUCI includes the actual rates of the service flows processed by the multiple user equipment; and
the PCRF obtains, from the received RUCI, the actual rates of the service flows processed by the multiple user equipment.

Specifically, the PCRF obtains, by using an Np interface between the PCRF and the RCAF, the RUCI sent by the RCAF.

### Case 1

The RUCI that is received by the PCRF and that is sent by the RCAF or the service flow pass-through node includes an actual rate of a service flow processed by each user equipment within a specified time length.

In this case, the PCRF performs the following operations on the received actual rate of the service flow processed by each user equipment within the specified time length.

For the actual rate of the service flow processed by each user equipment within the specified time length, the PCRF determines whether the actual rate of the service flow processed by the user equipment within the specified time length is less than a specified rate threshold; and
if the actual rate of the service flow processed by the user equipment within the specified time length is less than the specified rate threshold, the PCRF determines that the service flow processed by the user equipment within the specified time length is in a congestion state and belongs to a congestion service flow; or
if the actual rate of the service flow processed by the user equipment within the specified time length is not less than the specified rate threshold, the PCRF determines that the service flow processed by the user equipment within the specified time length is not in congestion.

That is, after the PCRF determines the received actual rate of the service flow by each user equipment within the specified time length, if at least one actual rate in the received actual rates is less than the specified rate threshold, the PCRF is triggered to execute step 102 to determine a congestion relief policy.

It should be noted herein that in case 1, the PCRF negotiates with the RCAF; and the RCAF collects statistics on the actual rate of the service flow processed by each user equipment in the user equipment cluster, and sends, by using the Np interface in real-time or at a fixed time or in a periodic manner, the RUCI that carries a statistical result to the PCRF. The PCRF herein needs to determine, according to the statistical result, whether there is a service flow processed by a user equipment is in congestion.

### Case 2

The RUCI that is received by the PCRF and that is sent by the RCAF or the service flow pass-through node includes an actual rate of a service flow processed by a first congestion user equipment and an actual rate of a service flow processed by a second user equipment in the same user equipment cluster as the first user equipment.

It should be noted that the first congestion user equipment herein may refer to one user equipment, or may refer to multiple user equipment, and this is not specifically limited. In addition, the second user equipment may refer to one user equipment, or may refer to multiple user equipment, and this is not specifically limited.

It should be noted that if the RUCI includes the actual rates of the service flows processed by the multiple user equipment, a terminal identifier of each user equipment further needs to be included. The terminal identifier may be an IMSI (International Mobile Subscriber Identifier, international mobile subscriber identity), a user ID, or the like, and this is not specifically limited herein.

In another embodiment of the present invention, the first congestion user equipment is determined in the following manner:
The RCAF collects statistics on an actual rate of the service flow processed by the first user equipment within a specified time length, and calculates an average rate of the service flow processed by the first user equipment within the specified time length. When the average rate is less than a specified rate threshold, it is determined that the service flow processed by the first user equipment is in congestion.

It should be noted that the specified rate threshold may be preset by an operator, or may be dynamically delivered to the RCAF by the PCRF, and a specification manner is not specifically limited herein.

Specifically, the RCAF collects actual rates of service flows of different user equipment, and the actual rates of the service flows herein may come from a radio access network operation, administration and maintenance system (English: Radio Access Network Operation, Administration and Maintenance system, RAN OAM for short), or may come from a node (such as an eNodeB) of a radio access network (English: Radio Access Network, RAN for short).

For each user equipment, the RCAF calculates an average rate of a service flow processed by the user equipment within a specified time length, and compares the average rate with a specified rate threshold (or an expected service flow transmission rate); and if the average rate is less than the specified rate threshold, it indicates that the service flow processed by the user equipment is in congestion; or if the average rate is not less than the specified rate threshold, it indicates that the service flow processed by the user equipment is not in congestion.

Once the RCAF determines that a service flow processed by a user equipment is in congestion, when the RCAF determines that the service flow processed by the first user equipment is in congestion, the RCAF determines the second user equipment in the same user equipment cluster as the first user equipment, and is triggered to send the RUCI to the PCRF by using the Np interface.

The RUCI herein includes the actual rate of the service flow processed by the first congestion user equipment and the actual rate of the service flow processed by the second user equipment in the same user equipment cluster as the first user equipment.

For example, the RCAF obtains, from a mobility management entity (English: Mobility Management Entity, MME for short), the second user equipment accessing to the same cell as the first congestion user equipment, and obtains the actual rate of the service flow processed by the obtained second user equipment.

It should be noted that in case 1 and case 2, a service flow processed by a user equipment may be all service flows processed by the user equipment, or may be some service flows processed by the user equipment, and this is not limited herein. The some service flows processed by the user equipment should include at least one or more of the following service flows:
a congestion service flow;
a service flow whose service processing class is higher than a specified threshold;
a service flow preset by an operator or specified by the PCRF; or
a service flow whose actual rate is greater than a specified threshold.

The specified threshold may be preset by an operator or specified by the PCRF.

It should be noted that, in the service flows processed by the user equipment, if a sum of actual rates of multiple service flows of a same service type is greater than a threshold, the multiple service flows of the same service type may be processed as one service flow.

It should be noted that an actual rate of a service flow herein may refer to an actual rate of the service flow at an application layer, or may refer to an actual rate at another protocol layer, such as a rate at a MAC layer, and a type of rate indicated specifically by the actual rate of the service flow is not specifically limited herein. To obtain actual rates of service flows of different user equipment is to obtain actual rates of service flows of different user equipment at a same layer (for example, all the rates are at the application layer or at another-protocol layer).

In case 1 and case 2, a manner for sending the RUCI to the PCRF by the RCAF by using the Np interface includes but is not limited to the following:

### Manner 1

The RCAF generates one piece of RUCI by using the obtained actual rates of the service flows processed by the multiple user equipment, and sends the RUCI to the PCRF, that is, the RUCI received by the PCRF includes the actual transmission rates of the service flows processed by the multiple user equipment.

### Manner 2

The RCAF generates one piece of RUCI each time the RCAF obtains an actual rate of a service flow processed by each user equipment, and sends the RUCI to the PCRF, that is, the PCRF receives multiple pieces of RUCI, and each piece of RUCI includes an actual rate of a service flow processed by one user equipment.

It should be noted that a specific manner for sending the RUCI is not limited in this embodiment. The entire RUCI may be sent together, or may be split into multiple pieces of RUCI in any manner and then sent.

In case 1 and case 2, a form for sending the RUCI to the PCRF by the RCAF by using the Np interface includes but is not limited to the following:

The RUCI sent to the PCRF by the RCAF by using the Np interface may be carried in a Message message in a Diameter protocol, and specifically include a trigger manner and all SDFs of all user equipment.

All the SDFs of all the user equipment include all SDFs of each user equipment. All the SDFs of each user equipment include a user equipment identifier and each SDF. Each SDF includes an SDF identifier and a rate value of the SDF.

### For example:

* [Event-Trigger]: indicating a trigger manner for sending RUCI information;
* [Data-Rate-Description]: an AVP combination, including rate description of all SDFs (English: Service Data Flow; Chinese: service data flow) of all user equipment;
*[UE- Rate-Description]: an AVP combination, including rate description of all SDFs of the user equipment;
*[UE-ID]: an identifier of the UE, usually an IMSI value;
*[Flow-Rate-Description]: an AVP combination, including information about the SDF;
*[Flow-Description]: an identifier of the SDF; and
*[Flow-Data-Rate]: a rate value of the SDF.

It should be noted that the trigger manner that is indicated by the Event-Trigger and that is for reporting the RUCI by the RCAF to the PCRF may be a time-trigger manner, and for example, a time condition is preset on the RCAF; or may be an event-trigger manner, and for example, when the RCAF detects that a service flow processed by a user equipment is in congestion, sending the RUCI is triggered, or when the PCRF requires the RCAF to report the RUCI, sending the RUCI is triggered.

Optionally, as shown in table 1, table 1 is a schematic structural diagram of a format of RUCI sent by the RCAF.

**Table 1**

| | **Service flow identifier 1** | **Service flow identifies 2** | **···** | **Service flow identifiers n** |
|---|---|---|---|---|
| First user equipment | Actual rate 11 | Actual rate 12 | ... | Actual rate n1 |
| Second user equipment | Actual rate 21 | Actual rate 22 | ... | Actual rate n2 |
| ... | ... | ... | ... | ... |
| N^{th} user equipment | Actual rate n1 | Actual rate n2 | ... | Actual rate nn |

It should be noted that if n service flows are processed by the first user equipment, the RUCI sent by the RCAF may include actual rates of the n service flows processed by the first user equipment, or may include an actual rate of a service flow in the n service flows processed by the first user equipment.

Optionally, the method further includes:
obtaining, by the PCRF, subscription information of the multiple user equipment, or obtaining service flow information of the service flows processed by the multiple user equipment.

Specifically, the PCRF obtains the subscription information of the user equipment from an SPR, and obtains, from an AF, the service flow information of the service flow processed by the user equipment.

Step 102: The PCRF determines a congestion relief policy according to the obtained actual rates of the service flows processed by the multiple user equipment.

The congestion relief policy is used to limit an actual rate of a service flow processed by a user equipment in the multiple user equipment.

In step 102, to relieve system congestion, a radio resource needs to be coordinated between service flows processed by one or more user equipment, and an actual rate of a service flow is limited, so as to increase an actual rate of another service flow.

Specifically, the PCRF determines, according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
the PCRF determines the congestion relief policy according to the service flow whose actual rate is limited and the target rate of the limited service flow.

The target rate of the limited service flow includes a maximum bit rate of the limited service flow.

The congestion relief policy includes the service flow whose actual rate is limited and the target rate of the limited service flow.

The service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than a specified first threshold class; and/or
according to a service processing class included in the obtained application layer information of the service flows processed by the multiple user equipment, the service flow whose actual rate is limited belongs to a service flow whose service processing class is lower than a specified second threshold class.

The specified expected rate may be an expected rate or a maximum rate that is included in the application layer information and that is of the service flow; or may be a maximum rate that is included in the subscription information and that is allowed to be used by the user equipment; or may be determined according to another form. This is not limited herein.

The specified first threshold class and the specified second threshold class may be determined according to an actual requirement, or may be determined according to an actually processed service flow, and this is not specifically limited herein either.

Specifically, subscription information of each user equipment and/or application layer information of a service flow processed by each user equipment may be obtained in real time by the PCRF from another network element of a PCC architecture and stored locally.

For example, the PCRF may obtain the subscription information of the user equipment from the SPR, and obtains, from the AF, the application layer information of the service flow processed by the user equipment.

Specifically, a subscriber class of the user equipment is determined according to the obtained subscription information of the user equipment; and a service processing class, a minimum rate, and the like that are of the service flow processed by the user equipment are determined according to the obtained application layer information of the service flow.

It should be noted that a minimum rate of each service flow processed by each user equipment cannot always be determined from the obtained application layer information of the service flow, that is, it is possible that a minimum rate of a service flow cannot be determined.

Specifically, the PCRF selects, according to the determined subscriber class of each user equipment, the minimum rate of each service flow, and the actual rate of the service flow processed by each user equipment, a service flow whose actual rate needs to be increased, and estimates a radio resource required for increasing the actual rate to the expected rate or the minimum rate.

The service flow whose actual rate needs to be increased includes at least one or more of the following service flows:
a service flow whose actual rate is much less than the minimum rate;
a service flow whose actual rate is much less than the minimum rate and that is processed by a user equipment whose subscriber class is higher than the specified first threshold class; or
a service flow whose service processing class is higher than the specified second threshold class, whose actual rate is much less than the minimum rate, and that is processed by a user equipment whose subscriber class is higher than the specified first threshold class.

The PCRF selects, according to the determined subscriber class of each user equipment, the minimum rate of each service flow, and the actual rate of the service flow processed by each user equipment, the service flow whose actual rate needs to be limited, and calculates a target rate of the limited service flow according to the estimated required radio resource.

The service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than the specified first threshold class; and/or
according to a service processing class included in the obtained application layer information of the service flows processed by the multiple user equipment, the service flow whose actual rate is limited belongs to a service flow whose service processing class is lower than the specified second threshold class.

For example, three service flows of three user equipment are included in RUCI, and specific information is shown in table 2.

**Table 2**

| | **Actual rate** |
|---|---|
| User equipment A Service flow 1 | 1.5 Mbps |
| User equipment B Service flow 2 | 2 Mbps |
| User equipment C Service flow 3 | 3 Mbps |

According to subscription information of each user equipment, it is determined that a subscriber class of the user equipment A is higher than a subscriber class of the user equipment C. An expected rate of the service flow 1 processed by the user equipment A is 2 Mbps according to application layer information of the service flow, and a currently obtained actual rate of the service flow 1 processed by the user equipment A is 1.5 Mbps. The service flow 1 processed by the user equipment A may be considered in congestion, and is a determined service flow whose actual rate needs to be increased. An expected rate of the service flow 3 processed by the user equipment C is 1 Mbps (or unlimited) according to application layer information of the service flow, and a currently obtained actual rate of the service flow 3 processed by the user equipment C is 3 Mbps. The service flow 3 processed by the user equipment C may be considered as a determined service flow whose actual rate needs to be limited. Because the subscriber class of the user equipment A is higher than the subscriber class of the user equipment C, the PCRF decides to limit the actual rate of the service flow 3 processed by the user equipment C, so as to increase the actual rate of the service flow 1 processed by the user equipment A. That is, according to an estimated radio resource required for increasing the actual rate of the service flow 1 processed by the user equipment A from 1.5 Mbps to 2 Mbps, a target rate (such as 1 Mbps) of the service flow 3 processed by the user equipment C is obtained.

It should be noted that the obtained target rate of the service flow 3 processed by the user equipment C may be determined according to the radio resource required by the user equipment A, or may be determined according to a preset value, and this is not specifically limited herein.

In addition, if the actual rate of the service flow 1 processed by the user equipment A is increased from 1.5 Mbps to 2 Mbps, at least 1/3 (of a radio resource currently used by the user equipment A) needs to be added. According to a PSF (English: Proportional Fairness Scheduler, PFS for short) (proportional fairness scheduler) scheduling algorithm of a radio base station, a radio resource given up by the user equipment C whose actual rate is limited needs to be fairly allocated between the user equipment A and the user equipment B. The user equipment C needs to give up its 2/3 radio resource, and the target rate of the service flow 3 processed by the user equipment C is obtained according to the radio resource given up by the user equipment C, that is, the actual rate of the service flow 3 processed by the user equipment C is limited from original 3 Mbps to 1 Mbps. In this case, in the congestion relief policy determined by the PCR, a maximum bit rate (English: Maximum Bit Rate, MBR for short) of the service flow 2 processed by the user equipment C is set to 1 Mbps.

Step 103: The PCRF sends the congestion relief policy to a service flow pass-through node.

In step 103, the PCRF sends, by using a Gx interface, the congestion relief policy to the PCEF or the service flow pass-through node, and the PCEF or the service flow pass-through node performs a congestion control according to the received congestion relief policy.

Specifically, the PCEF may implement the congestion relief policy by executing a RED (Random Early Detection) algorithm in AQM (Active Queue Management) or a Token Bucket algorithm.

The PCRF receives the actual rates of the service flows processed by the multiple user equipment, and when determining the congestion relief policy, the PCRF uses an actual rate of a service flow processed by each user equipment as a basis for QoS parameter quantization, so that the determined congestion relief policy is a PCC policy set for one or more service flows of one or more user equipment, and congestion relief control accuracy is effectively increased.

The user equipment recorded in table 2 are still used as an example. The PCEF or the service flow pass-through node performs a congestion control according to the received congestion relief policy, to obtain a predicted rate of a service flow processed by each user equipment, as shown in table 3.

**Table 3**

| | **Predicted rate** |
|---|---|
| User equipment A Service flow 1 | 2 Mbps |
| User equipment B Service flow 2 | 2.6 Mbps |
| User equipment C Service flow 3 | 1 Mbps |

It should be noted that in addition to the PCEF, a network element device for executing the congestion relief policy may be an eNodeB, an AF, or a traffic detection function (English: Traffic Detection Function, TDF for short), and an entity for executing the congestion relief policy is not specifically limited herein.

The service flow pass-through node includes at least one or more of a policy and charging enforcement function PCEF, a traffic detection function TDF, or an evolved NodeB eNodeB.

It should be noted that the foregoing PCRF is a logical PCRF, a quantity of physical PCRFs is not specifically limited herein, and multiple PCRFs that complete a same function together are considered as a same logical PCRF.

It should be noted that the foregoing MME is a logical MME, a quantity of physical MMEs is not specifically limited herein, and multiple MMEs that complete a same function together are considered as a same logical MME.

According to solutions in Embodiment 1 of the present invention, a policy and charging rule function PCRF obtains actual rates of service flows processed by multiple user equipment. The PCRF determines a congestion relief policy according to the obtained actual rates of the service flows processed by the multiple user equipmentequipment. The congestion relief policy is used to limit an actual rate of a service flow processed by a user equipment in the multiple user equipment. The PCRF sends the congestion relief policy to a service flow pass-through node, so that the service flow pass-through node executes the congestion relief policy. In this embodiment of the present invention, it is determined, according to obtained actual rates of service flows processed by different user equipment, that an actual rate of a service flow processed by a user equipment is limited, so as to increase an actual rate of a service flow processed by another user equipment. This effectively relieves system congestion and improves user experience during congestion.

### Embodiment 2

As shown in FIG. 2, FIG. 2 is a schematic flowchart of a radio congestion control method according to Embodiment 2 of the present invention. The method may be described as follows:
Step 201: A PCRF obtains actual rates of service flows processed by multiple user equipment and channel qualities measured by the multiple user equipment.

It should be noted that the channel quality herein may refer to an average value of channel quality indicators (English: Channel Quality Indicator, CQI for short), or may refer to an average value of signal to noise ratios (English: Signal to Noice Ratio, SNR), and an indication form of the channel quality is not limited herein.

The PCRF obtains the channel qualities measured by the multiple user equipment.

Specifically, the PCRF receives RUCI sent by a radio congestion awareness function RCAF or a service flow pass-through node, where the RUCI includes the channel qualities measured by the multiple user equipment; and
the PCRF obtains, from the received RUCI, the channel qualities measured by the multiple user equipment.

It should be noted that a specific implementation manner of step 201 in Embodiment 2 of the present invention is the same as an implementation manner of step 101 in Embodiment 1 of the present invention, and details are not described herein again.

Step 202: The PCRF determines a congestion relief policy according to the obtained actual rates of the service flows processed by the multiple user equipment, the obtained channel qualities measured by the multiple user equipment, and obtained subscription information of the multiple user equipment or obtained application layer information of the service flows processed by the multiple user equipment.

The congestion relief policy is used to limit an actual rate of a service flow processed by a user equipment in the multiple user equipment.

In step 202, to relieve system congestion, a radio resource needs to be coordinated between service flows processed by one or more user equipment, and an actual rate of a service flow is limited, so as to increase an actual rate of another service flow.

The PCRF determines, according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and a target rate of the limited service flow; and
the PCRF determines the congestion relief policy according to the service flow whose actual rate is limited and the target rate of the limited service flow.

The target rate of the limited service flow includes a maximum bit rate of the limited service flow.

The congestion relief policy includes the service flow whose actual rate is limited and the target rate of the limited service flow.

The service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than a specified first threshold class; and/or
according to a service processing class included in the obtained application layer information of the service flows processed by the multiple user equipment, the service flow whose actual rate is limited belongs to a service flow whose service processing class is lower than a specified second threshold class.

The specified expected rate may be an expected rate or a maximum rate that is included in the application layer information and that is of the service flow; or may be a maximum rate that is included in the subscription information and that is allowed to be used by the user equipment; or may be determined according to another form. This is not limited herein.

The specified first threshold class and the specified second threshold class may be determined according to an actual requirement, or may be determined according to an actually processed service flow, and this is not specifically limited herein either.

Specifically, subscription information of each user equipment and/or application layer information of a service flow processed by each user equipment may be obtained in real time by the PCRF from another network element of a PCC architecture and stored locally.

For example, the PCRF may obtain the subscription information of the user equipment from an SPR, and obtains, from an AF, the application layer information of the service flow processed by the user equipment.

Specifically, a subscriber class of the user equipment is determined according to the obtained subscription information of the user equipment; and a service processing class, a minimum rate, and the like that are of the service flow processed by the user equipment are determined according to the obtained application layer information of the service flow.

It should be noted that a minimum rate of each service flow processed by each user equipment cannot always be determined from the obtained application layer information of the service flow, that is, it is possible that a minimum rate of a service flow cannot be determined.

Specifically, the PCRF selects, according to the determined subscriber class of each user equipment, the minimum rate of each service flow, and the actual rate of the service flow processed by each user equipment, a service flow whose actual rate needs to be increased, and estimates a radio resource required for increasing the actual rate to the expected rate or the minimum rate.

The service flow whose actual rate needs to be increased includes at least one or more of the following service flows:
a service flow whose actual rate is much less than the minimum rate;
a service flow whose actual rate is much less than the minimum rate and that is processed by a user equipment whose subscriber class is higher than the specified first threshold class; or
a service flow whose service processing class is higher than the specified second threshold class, whose actual rate is much less than the minimum rate, and that is processed by a user equipment whose subscriber class is higher than the specified first threshold class.

The PCRF selects, according to the determined subscriber class of each user equipment, the minimum rate of each service flow, and the actual rate of the service flow processed by each user equipment, the service flow whose actual rate needs to be limited, and calculates the target rate of the limited service flow according to the estimated required radio resource.

The service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than the specified first threshold class; and/or
according to a service processing class included in the obtained application layer information of the service flows processed by the multiple user equipment, the service flow whose actual rate is limited belongs to a service flow whose service processing class is lower than the specified second threshold class.

The radio resource required for increasing the actual rate of the service flow may be determined according to a channel quality measured by the user equipment corresponding to the service flow whose actual rate needs to be increased and according to a mapping relationship between a channel quality and a service flow rate. The target rate of the service flow whose actual rate is limited may be determined according to a channel quality measured by the user equipment corresponding to the service flow whose actual rate needs to be limited and according to a mapping relationship between a channel quality and a service flow rate.

Specifically, for the mapping relationship between a channel quality and a service flow rate, refer to table 4.

**Table 4**

| **Equivalent SNR threshold (BLER=10%)** | **CQI** | **Modulation (modulation mode)** | **Code Rate (code rate)** | **Bit Rate (bit rate) Mbps** |
|---|---|---|---|---|
| -6.71 | 1 | QPSK | 0.08 | 0.95 |
| -5.11 | 2 | QPSK | 0.12 | 1.46 |
| -3.15 | 3 | QPSK | 0.19 | 2.35 |
| -0.87 | 4 | QPSK | 0.30 | 3.75 |
| 0.71 | 5 | QPSK | 0.44 | 5.47 |
| 2.529 | 6 | QPSK | 0.59 | 7.34 |
| 4.606 | 7 | 16-QAM | 0.37 | 9.21 |
| 6.431 | 8 | 16-QAM | 0.48 | 11.94 |
| 8.326 | 9 | 16-QAM | 0.60 | 15.02 |
| 10.3 | 10 | 64-QAM | 0.46 | 17.04 |
| 12.22 | 11 | 64-QAM | 0.55 | 20.73 |
| 14.01 | 12 | 64-QAM | 0.65 | 24.35 |
| 15.81 | 13 | 64-QAM | 0.75 | 28.23 |
| 17.68 | 14 | 64-QAM | 0.85 | 31.92 |
| 19.61 | 15 | 64-QAM | 0.93 | 34.66 |

It should be noted that data in the foregoing comparison table is empirical data in a 10-MHZ-bandwidth LTE system, there is no uniform and standard data, and data varies with actual implementation situations of different types of base stations of various vendors.

For example, three service flows of three user equipment are included in RUCI, and specific information is shown in table 5.

**Table 5**

| | **Chanel quality (CQI)** | **Actual rate** |
|---|---|---|
| User equipment A Service flow 1 | 4 | 1.5 Mbps |
| User equipment B Service flow 2 | 5.5 | 2 Mbps |
| User equipment C Service flow 3 | 7.5 | 3 Mbps |

According to subscription information of each user equipment, it is determined that a subscriber class of the user equipment A is higher than a subscriber class of the user equipment C, and the subscriber class of the user equipment A is higher than a subscriber class of the user equipment B.

According to application layer information of a service flow, an expected rate of the service flow 1 processed by the user equipment A is 3 Mbps, and the service flow 1 processed by the user equipment A may be considered in congestion and is the determined service flow whose actual rate needs to be increased.

According to application layer information of a service flow, both the actual rate of the service flow 2 processed by the user equipment B and the actual rate of the service flow 3 processed by the user equipment C are not limited, that is, both the service flow 2 processed by the user equipment B and the service flow 3 processed by the user equipment C may be considered as service flows that can be limited. Therefore, the PCRF determines to limit the actual rate of the service flow 2 processed by the user equipment B and the actual rate of the service flow 3 processed by the user equipment C, so as to increase the actual rate of the service flow 1 processed by the user equipment A.

Specifically, according to the mapping relationship between a channel quality and a service flow rate, the channel quality for the user equipment A, the actual rate of the service flow 2 processed by the user equipment A, the channel quality for the user equipment B, the actual rate of the service flow 2 processed by the user equipment B, the channel quality for the user equipment C, and the actual rate of the service flow 3 processed by the user equipment C, the PCRF estimates that a ratio of a radio resource occupied by the service flow 1 processed by the user equipment A to a sum of radio resources occupied by the service flow 2 processed by the user equipment B and occupied by the service flow 3 processed by the user equipment C is 4:6.

The PCRF determines to increase the actual rate of the service flow 1 processed by the user equipment A from 1.5 Mbps to 3 Mbps, and at least a double (of a radio resource currently occupied by the user equipment A) is required, that is, the ratio of the radio resource occupied by the user equipment A to the radio resources occupied by the user equipment B and the user equipment C is adjusted to 8:2 from the original 4:6. In this case, separately, the actual rate of the service flow 2 processed by the user equipment B needs to be limited to 1/3, that is, the actual rate of the service flow 2 processed by the user equipment B is limited to 0.66 Mbps; and the actual rate of the service flow 3 processed by the user equipment C needs to be limited to 1/3, that is, the actual rate of the service flow 3 processed by the user equipment C is limited to 1 Mbps.

In the congestion relief policy determined by the PCRF, a maximum bit rate (MBR) of the service flow 2 processed by the user equipment B is set to 0.66 Mbps, and a maximum bit rate of the service flow 3 processed by the user equipment C is set to 1 Mbps.

Step 203: The PCRF sends the congestion relief policy to a service flow pass-through node.

In step 203, the PCRF sends, by using a Gx interface, the congestion relief policy to a PCEF or the service flow pass-through node, and the PCEF or the service flow pass-through node performs a congestion control according to the received congestion relief policy.

According to channel quality information measured by each user equipment, an actual rate of a service flow processed by each user equipment, and a mapping relationship between a channel quality and a service flow transmission rate, the PCRF can estimate, in a relatively accurate way, a radio resource volume occupied by the service flow processed by each user equipment, so that a target rate of a limited service flow can be accurately estimated, and effectiveness of the congestion relief policy is improved.

The method provided in this embodiment of the present invention further effectively mitigates impact of unbalanced radio resource allocation among service flows because of different application layer characteristics of the service flows or different priorities (such as QCI) of the service flows.

It should be noted that in addition to the PCEF and an eNodeB, a network element device for executing the congestion relief policy may be an AF or a traffic detection function (English: Traffic Detection Function, TDF for short), and an entity for executing the congestion relief policy is not specifically limited herein.

The user equipment recorded in table 5 are still used as an example, and the PCEF or the service flow pass-through node performs a congestion control according to the received congestion relief policy, to obtain a predicted rate of a service flow processed by each user equipment, as shown in table 6.

**Table 6**

| | **Predicted rate** |
|---|---|
| User equipment A Service flow 1 | 3 Mbps |
| User equipment B Service flow 2 | 0.66 Mbps |
| User equipment C Service flow 3 | 1 Mbps |

It should be noted that in addition to the PCEF, a network element device for executing the congestion relief policy may be an eNodeB, an AF, or a traffic detection function (English: Traffic Detection Function, TDF for short), and an entity for executing the congestion relief policy is not specifically limited herein.

The service flow pass-through node includes at least one or more of a policy and charging enforcement function PCEF, a traffic detection function TDF, or an evolved NodeB eNodeB.

It should be noted that the foregoing PCRF is a logical PCRF, a quantity of physical PCRFs is not specifically limited herein, and multiple PCRFs that complete a same function together are considered as a same logical PCRF.

It should be noted that the foregoing MME is a logical MME, a quantity of physical MMEs is not specifically limited herein, and multiple MMEs that complete a same function together are considered as a same logical MME.

In Embodiment 2 of the present invention, it is determined, according to obtained actual rates of service flows processed by different user equipment, that an actual rate of a service flow processed by a user equipment is limited, so as to increase an actual rate of a service flow processed by another user equipment. This effectively relieves system congestion and improves user experience during congestion.

### Embodiment 3

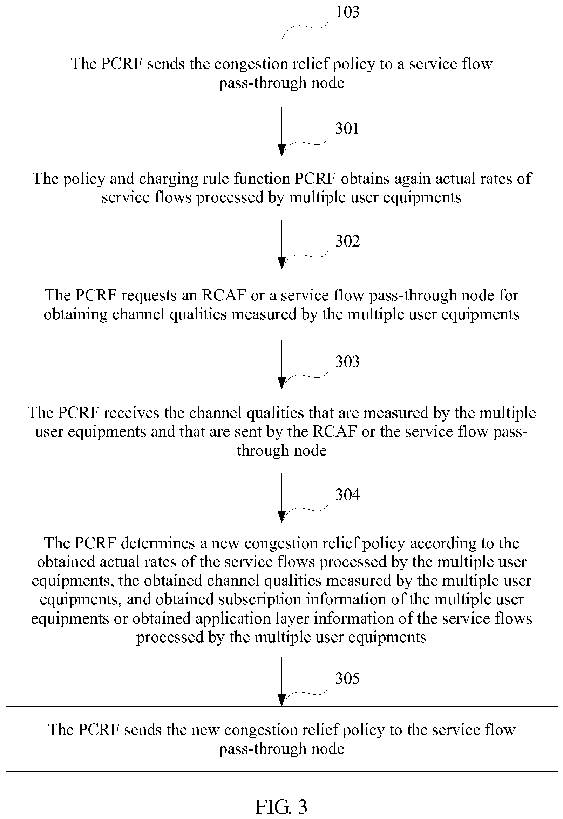

As shown in FIG. 3, FIG. 3 is a schematic flowchart of a radio congestion control method according to Embodiment 3 of the present invention. The method may be described as follows:

Embodiment 3 of the present invention provides further description on the basis of Embodiment 1 of the present invention.

In step 103 of Embodiment 1 of the present invention, the PCRF sends the congestion relief policy to the service flow pass-through node.

In step 103, the PCRF sends, by using a Gx interface, the congestion relief policy to the PCEF or the service flow pass-through node, and the PCEF or the service flow pass-through node performs a congestion control according to the received congestion relief policy.

Step 301: The policy and charging rule function PCRF obtains again actual rates of service flows processed by multiple user equipment.

The actual rates of the service flows processed by the multiple user equipment are reported after the congestion relief policy is sent by the PCRF in step 103, an obtaining manner is the same as that in step 101, and details are not described herein again.

Step 302: The PCRF requests an RCAF or a service flow pass-through node for obtaining channel qualities measured by the multiple user equipment.

Step 303: The PCRF receives the channel qualities that are measured by the multiple user equipment and that are sent by the RCAF or the service flow pass-through node.

It should be noted that when the RCAF or the service flow pass-through node sends a channel quality measured by each user equipment, a user equipment identifier is further included, for example, a first user equipment: a user equipment 1, and a channel quality 1.

Alternatively, the channel qualities may be sent together with the actual rates that are of the service flows processed by the multiple user equipment and that are obtained in step 101, as shown in table 7.

**Table 7**

| | **Chanel quality** | **Service flow identifier 1** | **Service flow identifier 2** | **···** | **Service flow identifier n** |
|---|---|---|---|---|---|
| User equipment 1 | Chanel quality 1 | Actual rate 11 | Actual rate 12 | ... | Actual rate n1 |
| User equipment 2 | Chanel quality 2 | Actual rate 21 | Actual rate 22 | ... | Actual rate n2 |
| ... | ... | ... | ... | ... | ... |
| User equipment N | Chanel quality n | Actual rate n1 | Actual rate n2 | ... | Actual rate nn |

It should be noted that the channel quality herein may refer to an average value of channel quality indicators (English: Channel Quality Indicator, CQI for short), or may refer to an average value of signal to noise ratios (English: Signal to Noice Ratio, SNR), and an indication form of the channel quality is not limited herein.

Step 304: The PCRF determines a new congestion relief policy according to the obtained actual rates of the service flows processed by the multiple user equipment, the obtained channel qualities measured by the multiple user equipment, and obtained subscription information of the multiple user equipment or obtained application layer information of the service flows processed by the multiple user equipment.

The new congestion relief policy is used to limit an actual rate of a service flow processed by a user equipment in the multiple user equipment.

In step 304, a manner for determining the new congestion relief policy is as described in step 202 of Embodiment 2, and details are not described herein again.

Step 305: The PCRF sends the new congestion relief policy to the service flow pass-through node.

In step 305, the PCRF sends the new congestion relief policy to the PCEF by using the Gx interface, and the PCEF performs a radio congestion control by using the received new congestion relief policy.

The service flow pass-through node includes at least one or more of a policy and charging enforcement function PCEF, a traffic detection function TDF, or an evolved NodeB eNodeB.

It should be noted that in addition to the PCEF and the eNodeB, a network element device for executing the congestion relief policy may be an AF or a traffic detection function (English: Traffic Detection Function, TDF for short), and an entity for executing the congestion relief policy is not specifically limited herein.

In Embodiment 3 of the present invention, according to actual rates that are of service flows processed by multiple user equipment and that are received for the second time, a PCRF adjusts a congestion relief policy delivered for the first time, and determines a new congestion relief policy according to received channel qualities measured by the multiple user equipment, thereby effectively increasing congestion control accuracy.

It should be noted that channel quality information for each user equipment may be requested and obtained after congestion information is received again or at another moment. The information may be requested by the PCRF, or may be actively reported by an RCAF or a service flow pass-through node, and this is not limited herein.

It should be noted that the channel quality information of each user equipment may not only be obtained from an RCAF, but also be directly obtained by the PCRF from an RAN OAM or an RAN side node, such as an eNodeB.

### Embodiment 4

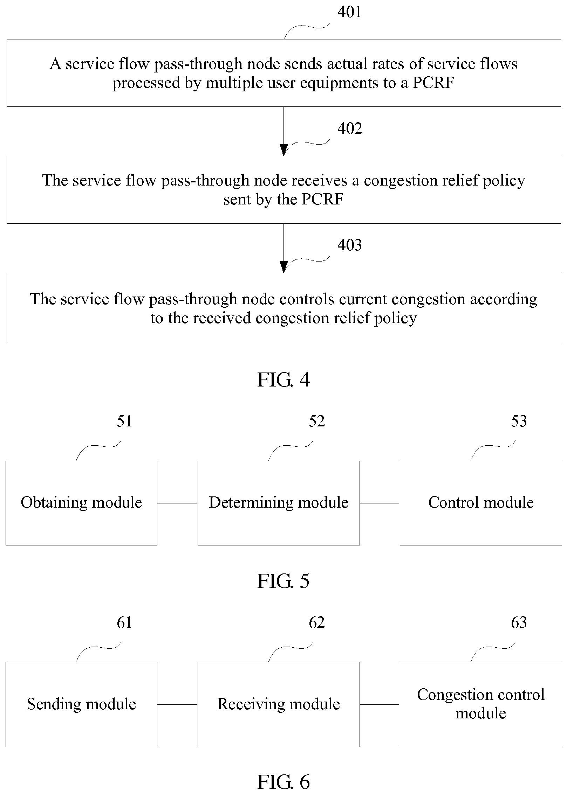

As shown in FIG. 4, FIG. 4 is a schematic flowchart of a radio congestion control method according to Embodiment 4 of the present invention. Embodiment 4 of the present invention is executed by a service flow pass-through node. The method may be described as follows:
Step 401: The service flow pass-through node sends actual rates of service flows processed by multiple user equipment to a PCRF.
Step 401 that the service flow pass-through node sends actual rates of service flows processed by multiple user equipment to a PCRF includes:
   sending, by the service flow pass-through node, RAN user plane congestion information RUCI to the PCRF, where the RUCI includes the actual rates of the service flows processed by the multiple user equipment.

Optionally, that the service flow pass-through node sends actual rates of service flows processed by multiple user equipment to a PCRF includes:
collecting, by the service flow pass-through node, statistics on actual rates of the service flows processed by the multiple user equipment within a specified time length, and calculating an average rate of a service flow processed by each user equipment within the specified time length; and
when a calculated average rate of at least one service flow is less than a specified rate threshold, triggering the service flow pass-through node to send the actual rates of the service flows processed by the multiple user equipment to the PCRF.

Step 402: The service flow pass-through node receives a congestion relief policy sent by the PCRF.

The congestion relief policy is determined by the PCRF according to the actual rates of the service flows processed by the multiple user equipment, and the congestion relief policy is used to limit an actual rate a service flow of a user equipment in the multiple user equipment.

Step 403: The service flow pass-through node controls current congestion according to the received congestion relief policy.

In step 403, the congestion relief policy includes the service flow whose actual rate is limited and a target rate of the service flow whose actual rate is limited.

For the user equipment processing the service flow whose actual rate is limited, the service flow pass-through node reduces, according to the target rate that is of the service flow whose actual rate is limited and that is included in the congestion relief policy, the actual rate of the limited service flow processed by the user equipment.

The service flow pass-through node includes at least one or more of a policy and charging enforcement function PCEF, a traffic detection function TDF, or an evolved NodeB eNodeB.

### Embodiment 5

As shown in FIG. 5, FIG. 5 is a schematic structural diagram of a radio congestion control device according to Embodiment 5 of the present invention. The radio congestion control device includes an obtaining module 51, a determining module 52, and a control module 53.

The obtaining module 51 is configured to obtain actual rates of service flows processed by multiple user equipment.

The determining module 52 is configured to determine a congestion relief policy according to the actual rates that are of the service flows processed by the multiple user equipment and that are obtained by the obtaining module 51, where the congestion relief policy is used to limit an actual rate of a service flow processed by a user equipment in the multiple user equipment.

The control module 53 is configured to send the congestion relief policy determined by the determining module 52 to a service flow pass-through node.

Specifically, the obtaining module 51 is further configured to: obtain subscription information of the multiple user equipment, or obtain service flow information of the service flows processed by the multiple user equipment.

The determining module 52 is specifically configured to: determine, according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
determine the congestion relief policy according to the service flow whose actual rate is limited and the target rate of the limited service flow.

The target rate of the limited service flow includes a maximum bit rate of the limited service flow.

Specifically, the obtaining module 51 is further configured to obtain channel qualities measured by the multiple user equipment.

The determining module 52 is specifically configured to: determine, according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and the target rate of the limited service flow; and
determine the congestion relief policy according to the service flow whose actual rate is limited and the target rate of the limited service flow.

Specifically, the service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than a specified first threshold class; and/or
according to a service processing class included in the obtained application layer information of the service flows processed by the multiple user equipment, the service flow whose actual rate is limited belongs to a service flow whose service processing class is lower than a specified second threshold class.

Specifically, the obtaining module 51 is specifically configured to: receive RAN user plane congestion information RUCI sent by a radio congestion awareness function RCAF or the service flow pass-through node, where the RUCI includes the actual rates of the service flows processed by the multiple user equipment; and obtain, from the received RUCI, the actual rates of the service flows processed by the multiple user equipment.

Specifically, the service flow pass-through node includes at least one or more of a policy and charging enforcement function PCEF, a traffic detection function TDF, or an evolved NodeB eNodeB.

The radio congestion control device provided in Embodiment 5 of the present invention may be a logical component integrated in the PCRF, or may be a device independent of the PCRF; and may be implemented in a hardware manner, or may be implemented in a software manner.

### Embodiment 6

As shown in FIG. 6, FIG. 6 is a schematic structural diagram of a radio congestion control device according to Embodiment 6 of the present invention. The device includes: a sending module 61, a receiving module 62, and a congestion control module 63.

The sending module 61 is configured to send actual rates of service flows processed by multiple user equipment to a policy and charging rule function Policy and Charging Rule Function.

The receiving module 62 is configured to receive a congestion relief policy sent by the PCRF, where the congestion relief policy is determined by the PCRF according to the actual rates of the service flows processed by the multiple user equipment, and the congestion relief policy is used to limit an actual rate of a service flow of a user equipment in the multiple user equipment.

The congestion control module 63 is configured to control current congestion according to the received congestion relief policy.

Specifically, the sending module 61 is specifically configured to send RAN user plane congestion information RUCI to the policy and charging rule function Policy and Charging Rule Function, where the RUCI includes the actual rates of the service flows processed by the multiple user equipment.

The sending module 61 is specifically configured to: collect statistics on actual rates of the service flows processed by the multiple user equipment within a specified time length, and calculate an average rate of a service flow processed by each user equipment within the specified time length; and
when a calculated average rate of at least one service flow is less than a specified rate threshold, be triggered to send the actual rates of the service flows processed by the multiple user equipment to the PCRF.

Optionally, the congestion relief policy includes the service flow whose actual rate is limited and a target rate of the service flow whose actual rate is limited.

The congestion control module 63 is specifically configured to: for the user equipment processing the service flow whose actual rate is limited, reduce, according to the target rate that is of the service flow whose actual rate is limited and that is included in the congestion relief policy, the actual rate of the limited service flow processed by the user equipment.

The radio congestion control device provided in Embodiment 6 of the present invention may be a logical component integrated in a service flow pass-through node, or may be a device independent of a service flow pass-through node; and may be implemented in a hardware manner, or may be implemented in a software manner.

The service flow pass-through node includes at least one or more of a policy and charging enforcement function PCEF, a traffic detection function TDF, or an evolved NodeB eNodeB.

### Embodiment 7

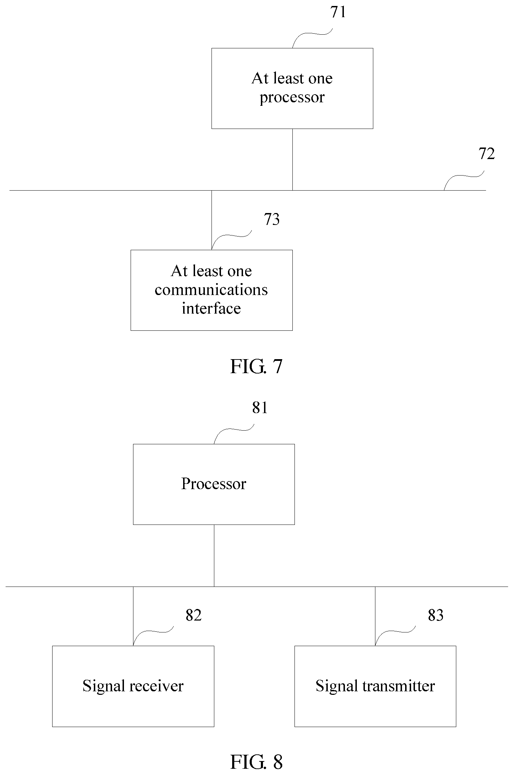

As shown in FIG. 7, FIG. 7 is a schematic structural diagram of a radio congestion control device according to Embodiment 7 of the present invention. The radio congestion control device has a function of executing Embodiment 1 to Embodiment 4 of the present invention. The radio congestion control device may use a general computer system structure, and the computer system structure may be specifically a processor-based computer. The radio congestion control device entity includes at least one processor 71, a communications bus 72, and at least one communications interface 73. The at least one processor 71 and the at least one communications interface 73 communicate by using the communications bus 72.

The at least one communications interface 73 is configured to obtain actual rates of service flows processed by multiple user equipment.

The at least one processor 71 is configured to determine a congestion relief policy according to the obtained actual rates of the service flows processed by the multiple user equipmentequipment. The congestion relief policy is used to limit an actual rate of a service flow processed by a user equipment in the multiple user equipment.

The at least one communications interface 73 is further configured to send the congestion relief policy to a service flow pass-through node.

Specifically, the at least one communications interface 73 is further configured to: obtain subscription information of the multiple user equipment, or obtain service flow information of the service flows processed by the multiple user equipment.

The at least one processor 71 is specifically configured to: determine, according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
determine the congestion relief policy according to the service flow whose actual rate is limited and the target rate of the limited service flow.

The target rate of the limited service flow includes a maximum bit rate of the limited service flow.

Specifically, the at least one communications interface 73 is further configured to obtain channel qualities measured by the multiple user equipment.

The at least one processor 71 is specifically configured to: determine, according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and the target rate of the limited service flow; and
determine the congestion relief policy according to the service flow whose actual rate is limited and the target rate of the limited service flow.

Specifically, the service flow whose actual rate is limited meets one or more of the following conditions:
the actual rate of the service flow is greater than a specified expected rate;
according to a subscriber class included in the obtained subscription information of the multiple user equipment, the service flow whose actual rate is limited belongs to a service flow processed by a user equipment whose subscriber class is lower than a specified first threshold class; and/or
according to a service processing class included in the obtained application layer information of the service flows processed by the multiple user equipment, the service flow whose actual rate is limited belongs to a service flow whose service processing class is lower than a specified second threshold class.

The at least one communications interface 73 is specifically configured to: receive RAN user plane congestion information RUCI sent by a radio congestion awareness function RCAF or the service flow pass-through node, where the RUCI includes the actual rates of the service flows processed by the multiple user equipment; and
obtain, from the received RUCI, the actual rates of the service flows processed by the multiple user equipment.

Specifically, the service flow pass-through node includes at least one or more of a policy and charging enforcement function PCEF, a traffic detection function TDF, or an evolved NodeB eNodeB.

The processor 71 may be a general-purpose central processing unit (CPU), a microprocessor, an application-specific integrated circuit (application-specific integrated circuit, ASIC), or one or more integrated circuits used to control execution of programs of the solutions in the present invention.

The communications bus 72 may include a path in which information is transmitted between the foregoing components. The communications interface 73, by using any apparatus such as a transceiver, is configured to communicate with another device or a communications network, such as Ethernet, a radio access network (RAN), or a wireless local area network (Wireless Local Area Networks, WLAN).

### Embodiment 8

As shown in FIG. 8, FIG. 8 is a schematic structural diagram of a radio congestion control device according to Embodiment 8 of the present invention. The radio congestion control device has a function of executing Embodiment 1 to Embodiment 4 of the present invention. The radio congestion control device may use a general computer system structure, and the computer system structure may be specifically a processor-based computer. The radio congestion control device entity includes at least one processor 81, a signal receiver 82, and a signal transmitter 83.

The signal transmitter 83 is configured to send actual rates of service flows processed by multiple user equipment to a policy and charging rule function Policy and Charging Rule Function.

The signal receiver 82 is configured to receive a congestion relief policy sent by the PCRF, where the congestion relief policy is determined by the PCRF according to the actual rates of the service flows processed by the multiple user equipment, and the congestion relief policy is used to limit an actual rate of a service flow of a user equipment in the multiple user equipment.

The processor 81 is configured to control current congestion according to the received congestion relief policy.

Specifically, the signal transmitter 83 is specifically configured to send RAN user plane congestion information RUCI to the policy and charging rule function Policy and Charging Rule Function, where the RUCI includes the actual rates of the service flows processed by the multiple user equipment.

The signal transmitter 83 is specifically configured to: collect statistics on actual rates of the service flows processed by the multiple user equipment within a specified time length, and calculate an average rate of a service flow processed by each user equipment within the specified time length; and
when a calculated average rate of at least one service flow is less than a specified rate threshold, be triggered to send the actual rates of the service flows processed by the multiple user equipment to the PCRF.

Specifically, the congestion relief policy includes the service flow whose actual rate is limited and a target rate of the service flow whose actual rate is limited.

The processor 81 is specifically configured to: for the user equipment processing the service flow whose actual rate is limited, reduce, according to the target rate that is of the service flow whose actual rate is limited and that is included in the congestion relief policy, the actual rate of the limited service flow processed by the user equipment.

The processor 81 may be a general-purpose central processing unit (CPU), a microprocessor, an application-specific integrated circuit (application-specific integrated circuit, ASIC), or one or more integrated circuits used to control execution of programs of the solutions in the present invention.

A person skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, a person skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A radio congestion control method, comprising:
obtaining, by a policy and charging rule function Policy and Charging Rule Function, actual rates of service flows processed by multiple user equipment;
determining, by the PCRF, a congestion relief policy according to the obtained actual rates of the service flows processed by the multiple user equipment, wherein the congestion relief policy is used to limit an actual rate of a service flow processed by a user equipment in the multiple user equipment; and
sending, by the PCRF, the congestion relief policy to a service flow pass-through node.

2. The method according to claim 1, wherein the method further comprises:
obtaining, by the PCRF, subscription information of the multiple user equipment, or obtaining service flow information of the service flows processed by the multiple user equipment; and
the determining, by the PCRF, a congestion relief policy according to the obtained actual rates of the service flows processed by the multiple user equipment comprises:
determining, by the PCRF according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
determining, by the PCRF, the congestion relief policy according to the service flow whose actual rate is limited and the target rate of the limited service flow, wherein
the target rate of the limited service flow comprises a maximum bit rate of the limited service flow.

3. The method according to claim 2, wherein the method further comprises:
obtaining, by the PCRF, channel qualities measured by the multiple user equipment; and
the determining, by the PCRF, a congestion relief policy according to the obtained actual rates of the service flows processed by the multiple user equipment comprises:
determining, by the PCRF according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and the target rate of the limited service flow; and
determining, by the PCRF, the congestion relief policy according to the service flow whose actual rate is limited and the target rate of the limited service flow.

4. The method according to any one of claims 1 to 3, wherein the service flow whose actual rate is limited meets one or more of the following conditions:
the actual rate of the service flow is greater than a specified expected rate;
according to a subscriber class comprised in the obtained subscription information of the multiple user equipment, the service flow whose actual rate is limited belongs to a service flow processed by a user equipment whose subscriber class is lower than a specified first threshold class; and/or
according to a service processing class comprised in the obtained application layer information of the service flows processed by the multiple user equipment, the service flow whose actual rate is limited belongs to a service flow whose service processing class is lower than a specified second threshold class.

5. The method according to any one of claims 1 to 4, wherein the obtaining, by a PCRF, actual rates of service flows processed by multiple user equipment comprises:
receiving, by the PCRF, RAN user plane congestion information RUCI sent by a radio congestion awareness function RCAF or the service flow pass-through node, wherein the RUCI comprises the actual rates of the service flows processed by the multiple user equipment; and
obtaining, by the PCRF from the received RUCI, the actual rates of the service flows processed by the multiple user equipment.

6. The method according to claim 5, wherein the service flow pass-through node comprises at least one or more of a policy and charging enforcement function PCEF, a traffic detection function TDF, or an evolved NodeB eNodeB.

7. A radio congestion control method, comprising:
sending, by a service flow pass-through node, actual rates of service flows processed by multiple user equipment to a policy and charging rule function Policy and Charging Rule Function;
receiving, by the service flow pass-through node, a congestion relief policy sent by the PCRF, wherein the congestion relief policy is determined by the PCRF according to the actual rates of the service flows processed by the multiple user equipment, and the congestion relief policy is used to limit an actual rate of a service flow of a user equipment in the multiple user equipment; and
controlling, by the service flow pass-through node, current congestion according to the received congestion relief policy.

8. The method according to claim 7, wherein the sending, by a service flow pass-through node, actual rates of service flows processed by multiple user equipment to a policy and charging rule function Policy and Charging Rule Function comprises:
sending, by the service flow pass-through node, RAN user plane congestion information RUCI to the policy and charging rule function Policy and Charging Rule Function, wherein the RUCI comprises the actual rates of the service flows processed by the multiple user equipment.

9. The method according to claim 7 or 8, wherein the sending, by a service flow pass-through node, actual rates of service flows processed by multiple user equipment to a policy and charging rule function Policy and Charging Rule Function comprises:
collecting, by the service flow pass-through node, statistics on actual rates of the service flows processed by the multiple user equipment within a specified time length, and calculating an average rate of a service flow processed by each user equipment within the specified time length; and
when a calculated average rate of at least one service flow is less than a specified rate threshold, triggering the service flow pass-through node to send the actual rates of the service flows processed by the multiple user equipment to the PCRF.

10. The method according to any one of claims 7 to 9, wherein the congestion relief policy comprises the service flow whose actual rate is limited and a target rate of the service flow whose actual rate is limited; and
the controlling, by the service flow pass-through node, current congestion according to the received congestion relief policy comprises:
for the user equipment processing the service flow whose actual rate is limited, reducing, by the service flow pass-through node according to the target rate that is of the service flow whose actual rate is limited and that is comprised in the congestion relief policy, the actual rate of the limited service flow processed by the user equipment.

11. A radio congestion control device, comprising:
an obtaining module, configured to obtain actual rates of service flows processed by multiple user equipment;
a determining module, configured to determine a congestion relief policy according to the obtained actual rates of the service flows processed by the multiple user equipment, wherein the congestion relief policy is used to limit an actual rate of a service flow processed by a user equipment in the multiple user equipment; and
a control module, configured to send the congestion relief policy to a service flow pass-through node.

12. The device according to claim 11, wherein
the obtaining module is further configured to: obtain subscription information of the multiple user equipment, or obtain service flow information of the service flows processed by the multiple user equipment; and
the determining module is specifically configured to: determine, according to the obtained actual rates of the service flows processed by the multiple user equipment and the obtained subscription information of the multiple user equipment or obtained application layer information of the service flows processed by the multiple user equipment, the service flow whose actual rate is limited and a target rate of the limited service flow; and
determine the congestion relief policy according to the service flow whose actual rate is limited and the target rate of the limited service flow, wherein
the target rate of the limited service flow comprises a maximum bit rate of the limited service flow.

13. The device according to claim 12, wherein
the obtaining module is further configured to obtain channel qualities measured by the multiple user equipment; and
the determining module is specifically configured to: determine, according to the obtained actual rates of the service flows processed by the multiple user equipment, the obtained channel qualities measured by the multiple user equipment, and the obtained subscription information of the multiple user equipment or the obtained application layer information of the service flows processed by the multiple user equipment, the service flow whose actual rate is limited and the target rate of the limited service flow; and
determine the congestion relief policy according to the service flow whose actual rate is limited and the target rate of the limited service flow.

14. The device according to any one of claims 11 to 13, wherein the service flow whose actual rate is limited meets one or more of the following conditions:
the actual rate of the service flow is greater than a specified expected rate;
according to a subscriber class comprised in the obtained subscription information of the multiple user equipment, the service flow whose actual rate is limited belongs to a service flow processed by a user equipment whose subscriber class is lower than a specified first threshold class; and/or
according to a service processing class comprised in the obtained application layer information of the service flows processed by the multiple user equipment, the service flow whose actual rate is limited belongs to a service flow whose service processing class is lower than a specified second threshold class.

15. The device according to any one of claims 11 to 14, wherein
the obtaining module is specifically configured to: receive RAN user plane congestion information RUCI sent by a radio congestion awareness function RCAF or the service flow pass-through node, wherein the RUCI comprises the actual rates of the service flows processed by the multiple user equipment; and obtain, from the received RUCI, the actual rates of the service flows processed by the multiple user equipment.

16. The device according to claim 15, wherein the service flow pass-through node comprises at least one or more of a policy and charging enforcement function PCEF, a traffic detection function TDF, or an evolved NodeB eNodeB.

17. A radio congestion control device, comprising:
a sending module, configured to send actual rates of service flows processed by multiple user equipment to a policy and charging rule function Policy and Charging Rule Function;
a receiving module, configured to receive a congestion relief policy sent by the PCRF, wherein the congestion relief policy is determined by the PCRF according to the actual rates of the service flows processed by the multiple user equipment, and the congestion relief policy is used to limit an actual rate of a service flow of a user equipment in the multiple user equipment; and
a congestion control module, configured to control current congestion according to the received congestion relief policy.

18. The device according to claim 17, wherein
the sending module is specifically configured to send RAN user plane congestion information RUCI to the policy and charging rule function Policy and Charging Rule Function, wherein the RUCI comprises the actual rates of the service flows processed by the multiple user equipment.

19. The device according to claim 17 or 18, wherein
the sending module is specifically configured to: collect statistics on actual rates of the service flows processed by the multiple user equipment within a specified time length, and calculate an average rate of a service flow processed by each user equipment within the specified time length; and
when a calculated average rate of at least one service flow is less than a specified rate threshold, be triggered to send the actual rates of the service flows processed by the multiple user equipment to the PCRF.

20. The device according to any one of claims 17 to 19, wherein the congestion relief policy comprises the service flow whose actual rate is limited and a target rate of the service flow whose actual rate is limited; and
the congestion control module is specifically configured to: for the user equipment processing the service flow whose actual rate is limited, reduce, according to the target rate that is of the service flow whose actual rate is limited and that is comprised in the congestion relief policy, the actual rate of the limited service flow processed by the user equipment.
